# EUROPEAN PATENT APPLICATION

(11) **EP 2 597 001 A2**
(43) Date of publication of application: **29.05.2013**
(21) Application number: 12193147.1
(22) Date of filing: 19.11.2012
(51) Int. Cl.: B60S 1/40, B60S 1/38

(54) **Windscreen wiper device**

(30) Priority: 25.11.2011 DE 102011055711
(71) Applicant: Valeo Systèmes d'Essuyage, 78321 Le Mesnil Saint Denis (FR)
(72) Inventor: Egner-Walter, Bruno, 74076 Heilbronn (DE); Schaeuble, Michael, 71665 VAIHINGEN/ENZ (DE)
(74) Representative: Léveillé, Christophe

(57) **Abstract**

A windscreen wiper device (10; 10a; 10b), with a wiper blade (11) exchangeably fastened to a wiper arm (12) by means of a wiper blade adapter (17), wherein between the wiper arm (12) and the wiper blade adapter (17) a first connection is formed, which fixes the wiper blade (11) in the wiper blade longitudinal direction (15),
characterized in that
a second connection is provided between the wiper arm (12) and the wiper blade adapter (17) in the form of a magnet connection (21), which comprises at least one magnetic element (25; 36, 38) between the wiper arm (12) and the wiper blade adapter (17) wherein the magnetic force of the at least one magnetic element (25; 36, 38) acts at least substantially in perpendicular direction to the wiper blade longitudinal direction (15), and wherein on exceeding the magnetic holding force the wiper blade (11) detaches itself from the wiper arm (12).

## Description

### Prior Art

The invention relates to a windscreen wiper device according to the preamble of Claim 1.

A windscreen wiper device of this type known from practice has a wiper arm, to which a wiper blade is exchangeably fastened by means of a wiper blade adapter. In this case, a latched connection is normally formed between the wiper blade or the wiper blade adapter and the wiper arm, the wiper blade being locked during operation to the wiper arm, in particular in the wiper blade longitudinal direction, via said latched connection. In addition, the known connection between the wiper blade and the wiper arm is also formed in such a way that (tensile) forces introduced into the wiper blade perpendicular to the wiper blade longitudinal direction via the wiper arm are transferred to the wiper blade. Forces of this type occur, for example, when the wiper arm is pivoted so as to bring the wiper blade out of contact with the vehicle windscreen to be cleaned, for example so that it can be cleaned manually when refuelling. With cold exterior temperatures, it may be that the rubber of the wiper blade adheres to the vehicle windscreen to be cleaned as a result of frost. In particular if snow or ice is found on the vehicle windscreen at the same time, a vehicle driver may wish to clean the vehicle windscreen of the snow or ice before starting a journey. In this case too, he will therefore try to pivot the wiper arm, together with the wiper blade, away from the vehicle windscreen. Due to the adhesion produced between the wiper lip of the wiper rubber and the vehicle windscreen, this may lead to damage to the wiper lip, which shortens the service life of the wiper blade and reduces the wiping quality.

### Disclosure of the Invention

Proceeding from the presented prior art, the object of the invention is to develop a windscreen wiper device according to the preamble of Claim 1 in such a way that the intended function, that is to say the cleaning of the vehicle windscreen, is performed by means of the wiper blade, and that damage to the wiper blade, in particular at the wiper lip, can also be avoided however, should excessive forces running perpendicular to the wiper blade longitudinal direction be exerted onto the wiper blade. This object is achieved in accordance with the invention with a wiper blade device having the features of Claim 1 in that a second connection is provided between the wiper arm and the wiper blade adapter in the form of a magnet connection, which comprises at least one magnetic element between the wiper arm and the wiper blade adapter wherein the magnetic force of the at least one magnetic element acts at least substantially perpendicularly to the wiper blade longitudinal direction, and wherein on exceeding the magnetic holding force the wiper blade detaches itself from the wiper arm. In other words, this means that only a limited force perpendicular to the wiper blade longitudinal direction can be transferred onto the wiper blade as a result of the magnetic connection, and therefore the wiper blade is prevented from being damaged at its wiper lip as a result of an excessive detachment force, in particular if a wiper blade is frozen to a vehicle windscreen.

Advantageous developments of the wiper device according to the invention are disclosed in the dependent claims. All combinations of at least two of the features disclosed in the claims, the description and/or the figures fall within the scope of the invention.

In a particularly simple and compact constructional design, it is proposed for the at least one magnetic element to be constructed in a plate shape and to cooperate with a metallic, in particular plate-shaped counter-element.

Since the wiper arm is normally formed from a punched part and can thus act as a counter-element for a magnetic element, in accordance with an embodiment of the invention of particularly simple design, the magnetic element is arranged on the wiper blade adapter and cooperates directly with the wiper arm. There is thus no need for any separate counter-elements cooperating with the magnetic element, since this counter-element is formed by a portion of the wiper arm itself.

So as to provide an operator with a particularly simple and comfortable option for detaching the wiper blade from the wiper arm so as to replace the wiper blade, without having to apply a particularly high detachment force running perpendicularly to the wiper blade longitudinal axis for this purpose, it is proposed for two magnetic elements to be provided, which are arranged rotatably with respect to each other in an axis running perpendicularly to the wiper blade longitudinal direction, and for one of the magnetic elements to be coupled with a manual operating device for rotating the magnetic element in the axis about at least 180°. It is thus made possible, in a holding position of the two magnetic elements, to arrange the two magnetic elements in such a way that different poles of each of the magnetic elements are arranged adjacently, such that a particularly high holding force is achieved or the required holding force can be applied with relatively small magnetic elements. By contrast, to detach the wiper blade from the wiper arm, one magnetic element is rotated about 180° relative to the other, such that identical poles on the magnetic elements are now arranged adjacently and the magnetic elements therefore repel from one another.

Particularly simple and comfortable operation of the fastening device is achieved if the operating device is arranged on the upper side of the wiper arm.

To prevent the wiper blade from detaching from the wiper arm in a direction parallel to the wiper blade longitudinal direction during operation of said wiper blade, it is also proposed, in a connection between the wiper blade and the wiper arm of particularly simple design, for the connection to comprise axial stops on the wiper arm.

Further advantages, features and details of the invention will emerge from the following description of preferred exemplary embodiments and with the help of the drawing, in which:
- Figure 1: shows a longitudinal section through a connection region between a wiper blade and a wiper arm of a windscreen wiper device according to the invention,
- Figure 2: shows a section in the plane II-II of Figure 1 without illustration of the wiper blade adapter,
- Figure 3: shows a longitudinal section through a windscreen wiper device altered compared to Figure 1,
- Figure 4: shows a section in the plane IV-IV of Figure 3 without illustration of the wiper blade adapter,
- Figure 5: shows a longitudinal section of a windscreen wiper device, which again has been altered, and
- Figure 6: shows a side view of a windscreen wiper device according to the invention so as to illustrate the positive connection between the wiper arm and the wiper blade adapter.

Like components and functionally like components are provided with like reference numerals in the figures.

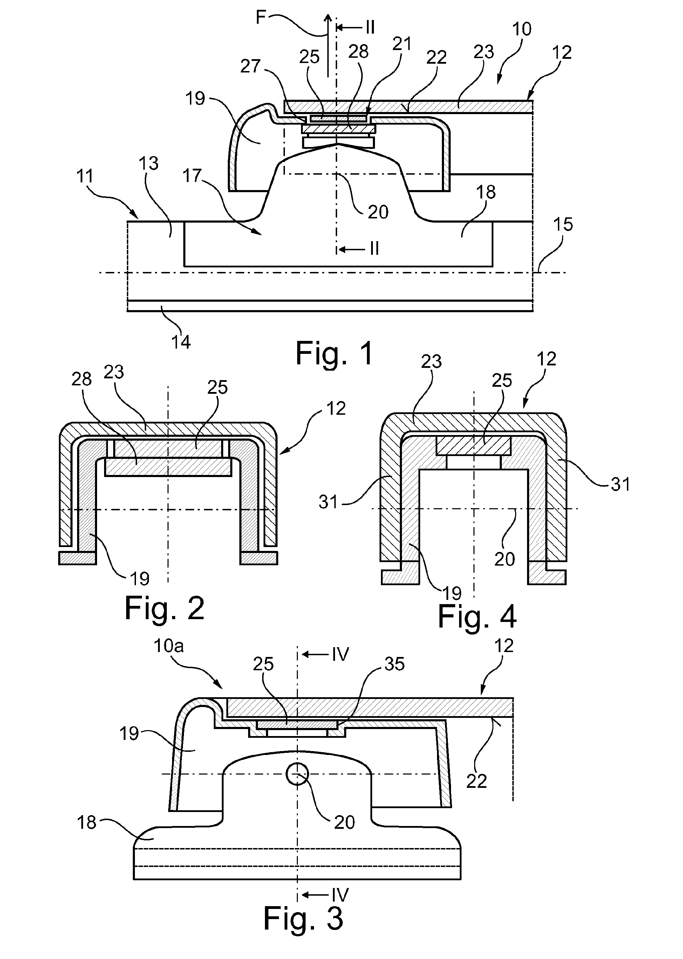

A first windscreen wiper device 10 according to the invention for cleaning vehicle windscreens is illustrated in Figures 1 and 2. The windscreen wiper device 10 comprises a wiper arm 12, which is merely illustrated in its connection region to a wiper blade 11 and of which the end region opposite the wiper blade 11 is connected in the conventional manner, at least indirectly, to a windscreen wiper motor, which pivots the wiper arm 12 to and fro over the vehicle windscreen.

The wiper blade 11 has a wiper blade body 13, which has a wiper lip 14 on its side facing the vehicle windscreen (not illustrated). The wiper blade body 13 extends substantially along a wiper blade longitudinal axis 15. The wiper blade body 13 is fastened to a wiper blade adapter 17, which has an adapter element 18 on the wiper blade side and an adapter element 19 on the wiper arm side, said adapter elements being arranged pivotably relative to one another in an axis 20. By means of the pivotability of the two adapter elements 18, 19 in the axis 20, continuous contact between the wiper lip 14 and the vehicle windscreen is enabled as the wiper blade 11 or the wiper lip 14 moves along the vehicle windscreen.

The wiper arm 12 consists of sheet metal and is formed as a punched/bent part. The wiper blade 11 is exchangeably fastened to the wiper arm 12. In accordance with the invention, the connection between the wiper blade 11 and the wiper arm 12 in a direction substantially perpendicular to the wiper blade longitudinal axis 15 is achieved via a magnetic connection 21. In the windscreen wiper device 10, the magnetic connection 21 comprises a magnet element 25, which is plate-shaped in particular and is fastened to the inner side 22 of a base branch 23 of the wiper arm 12 having a U-shaped cross section. When the wiper blade 11 is assembled, the magnet element 25 engages in a recess 27 in the adapter element 19 on the wiper arm side. Below the recess 27, the recess 27 is covered by a metallic counter-element 28, which is likewise preferably plate-shaped and cooperates with the magnet element 25. The metallic counter-element 28 is necessary, since the wiper blade adapter 17 otherwise consists at least substantially of plastic.

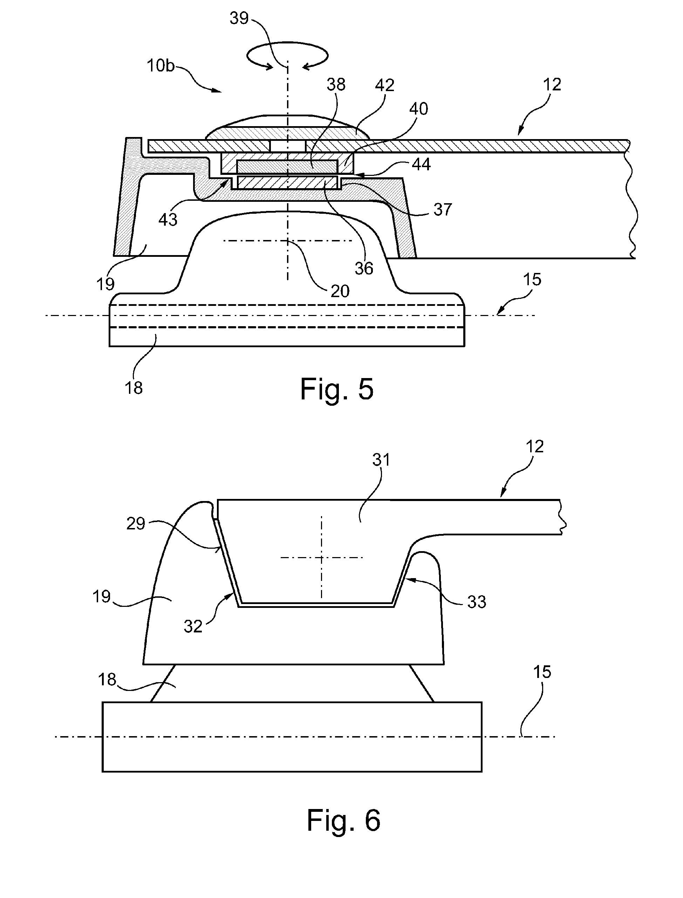

To prevent the wiper blade 11 from being able to move relative to the wiper arm 12 or detach from the wiper arm 12 when a force is applied in the direction of the wiper blade longitudinal axis 15, the adapter element 19 on the wiper arm side has a contour 29 at its outer face, into which the two (side) branches 31 of the wiper arm 12 engage with a positive fit so that a front contact region 32 and a rear contact region 33 are formed, which form a connection that prevents the wiper blade 11 from moving in a direction parallel to the wiper blade longitudinal axis 15, as shown in accordance with Figure 6.

A magnetic holding force between the wiper blade 11 and the wiper arm 12 acting perpendicular to the wiper blade longitudinal axis 15 is produced via the magnetic connection 21 between the wiper blade 11 and the wiper arm 12 and holds the wiper blade 11 in the intended position on the wiper arm 12. The connection 21 is maintained until the force of attraction between the magnetic element 25 and the metallic counter-element 28 is greater than a detachment force F (when the wiper blade 11 is held) acting perpendicular to the wiper blade longitudinal axis 15.

A modified windscreen wiper device 10a is illustrated in Figures 3 and 4. In the windscreen wiper device 10a, the magnetic element 25 is received with a positive fit within a mount 35 in the adapter element 19 on the wiper arm side. The magnetic element 25 cooperates directly with the inner side 22 of the wiper arm 12, that is to say the magnetic element 25 and the inner side 22 of the wiper arm 12 are in direct contact.

A further, modified windscreen wiper device 10b is illustrated in Figure 5. In the windscreen wiper device 10b, a first magnetic element 36 is provided, which is received with a positive fit in a recess 37 in the adapter element 19 on the wiper arm side. The first magnetic element 36 cooperates with a second magnetic element 38 fastened to the wiper arm 12. The two magnetic elements 36, 38 are the same size and are arranged rotatably relative to one another in the direction of the double-headed arrow 41 along an axis of rotation 39, which intersects the axis 20. To this end, the second magnetic element 38 is mounted in a mount member 40, which is arranged rotatably within the wiper arm 12 and which is rotatable via an operating element 42 arranged on the upper side 41 of the wiper arm 12. In the holding position between the two magnet elements 36, 38 illustrated in Figure 5, different poles are arranged adjacently on one side 43 of the two magnetic elements 36, 38, as is the case on the second side 44. The two magnet elements 36, 38 thus attract toward one another so that the wiper blade 11 is held on the wiper arm 12. To detach the connection between the wiper blade 11 and the wiper arm 12, the second magnetic element 38 is rotated about 180° in the axis of rotation 39 by means of the operating element 42 so that identical poles are now arranged adjacently on each of the two sides 43, 44. This causes a repulsion between the two magnet elements 36, 38, such that the wiper blade 11 detaches from the wiper arm 12.

The windscreen wiper devices 10, 10a, 10b described thus far can be altered or modified in a versatile manner, without departing from the scope of the inventive concept. In particular, the wiper blades 10 may have integrated nozzle openings for supplying a washing liquid to the vehicle windscreen, as is known *per se* from the prior art. Furthermore, the wiper blade 11 can be formed as a heatable wiper blade 11. The construction of the wiper blade 11 can generally be selected as desired for the invention, that is to say the wiper blade body 13 may comprise spring strips or the like for reinforcement, as is conventional.

### List of Reference Signs

- 10, 10a, 10b: windscreen wiper device
- 11: wiper blade
- 12: wiper arm
- 13: wiper blade body
- 14: wiper lip
- 15: wiper blade longitudinal axis
- 17: wiper blade adapter
- 18: adapter element on the wiper blade side
- 19: adapter element on the wiper arm side
- 20: axis
- 21: magnetic connection
- 22: inner side
- 23: base branch
- 25: magnet element
- 27: recess
- 28: counter-element
- 29: contour
- 31: branch
- 32: front contact region
- 33: rear contact region
- 35: mount
- 36: first magnetic element
- 37: recess
- 38: second magnetic element
- 39: axis of rotation
- 40: mount member
- 41: double-headed arrow
- 42: operating element
- 43: side
- 44: side
- F: detachment force

## Claims

1. A windscreen wiper device (10; 10a; 10b), with a wiper blade (11) exchangeably fastened to a wiper arm (12) by means of a wiper blade adapter (17), wherein between the wiper arm (12) and the wiper blade adapter (17) a first connection is formed, which fixes the wiper blade (11) in the wiper blade longitudinal direction (15),
**characterized in that**
a second connection is provided between the wiper arm (12) and the wiper blade adapter (17) in the form of a magnet connection (21), which comprises at least one magnetic element (25; 36, 38) between the wiper arm (12) and the wiper blade adapter (17) wherein the magnetic force of the at least one magnetic element (25; 36, 38) acts at least substantially in perpendicular direction to the wiper blade longitudinal direction (15), and wherein on exceeding the magnetic holding force the wiper blade (11) detaches itself from the wiper arm (12).

2. The windscreen wiper device according to Claim 1,
**characterized in that**
the at least one magnetic element (25) is constructed in a plate shape and cooperates with a metallic, in particular plate-shaped counter-element (28).

3. The windscreen wiper device according to Claim 1,
**characterized in that**
the magnetic element (25) is arranged on the wiper blade adapter (17) and cooperates directly with the wiper arm (12).

4. The windscreen wiper device according to Claim 1,
**characterized in that**
two magnetic elements (36, 38) are provided, which are arranged rotatably with respect to each other in an axis (39) running perpendicularly to the wiper blade longitudinal direction (15), and that one of the magnetic elements (38) is coupled with a manual operating device (42) for rotating the magnetic element (38) in the axis (39) about at least 180°.

5. The windscreen wiper device according to Claim 4,
**characterized in that**
the operating device (42) is arranged on the upper side of the wiper arm (12).

6. The windscreen wiper device according to Claim 4 or 5,
**characterized in that**
the magnetic element (38) which is coupled with the operating device (42) is arranged in a mount (40) of the operating element (42) on the side of the wiper arm (12) facing the wiper blade adapter (17).

7. The windscreen wiper device according to one of Claims 1 to 6,
**characterized in that**
the first connection between the wiper arm (12) and the wiper blade adapter (17) comprises axial stop regions (32, 33) formed between the wiper arm (12) and the wiper blade adapter (17).

8. The windscreen wiper device according to one of Claims 1 to 7,
**characterized in that**
the wiper blade adapter (17) has an adapter element (19) on the wiper arm side and an adapter element (18) on the wiper blade side, which are arranged pivotably with respect to each other.

9. A wiper blade (11) for use in a windscreen wiper device (10; 10a; 10b) according to one of Claims 1 to 8.
